## Europäisches Patentamt

## European Patent Office

## Office européen des brevets

(19)

(11) Veröffentlichungsnummer: **0 014 906**
**B1**

(12) **EUROPÄISCHE PATENTSCHRIFT**

(45) Veröffentlichungstag der Patentschrift:
27.07.83

(21) Anmeldenummer: **80100626.3**

(22) Anmeldetag: **07.02.80**

(51) Int. Cl.³: **F 16 J 15/32**

(54) **Stangen- oder Stössel-Dichtung.**

(30) Priorität: **15.02.79 DE 2905742**

(43) Veröffentlichungstag der Anmeldung:
**03.09.80 Patentblatt 80/18**

(45) Bekanntmachung des Hinweises auf die Patenterteilung:
**27.07.83 Patentblatt 83/30**

(84) Benannte Vertragsstaaten:
**AT CH FR GB IT SE**

(56) Entgegenhaltungen:
**CH-A-392 178**
**DE-U-7 831 104**
**FR-A-1 197 842**
**GB-A-974 752**
**US-A-2 907 596**

(73) Patentinhaber: **PRÄDIFA Präzisions-Dichtungs-Fabrik GmbH, Arnold-Jäger-Strasse 1, D-7120 Bietigheim-Bissingen (DE)**

(72) Erfinder: **Bucher, Hans, Buchenweg 3, D-7101 Obergruppenbach (DE)**

(74) Vertreter: **Wolff, Michael, Dipl.-Phys., Kirchheimer Strasse 69, D-7000 Stuttgart 75 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Stangen- oder Stößel-Dichtung

Die Erfindung betrifft eine Dichtung, insbesondere für pneumatische Kleinzylinder im Niederdruckbereich und für Pneumatikventile, zum Abdichten des Ringspaltes zwischen einer Kolbenstange oder einem Stößel und einem Zylinder- bzw. Ventilkopf mit einer Bohrung zur Aufnahme einer versenkten Lagerbuchse für die Kolbenstange bzw. den Stößel und mit einer axial vor der Lagerbuchse im Zylinder- bzw. Ventilkopf liegenden Ringnut zur Aufnahme eines einstückigen, eine bauliche Einheit aus homogenem Material bildenden Dichtungskörpers, welcher einen in der Nähe der Lagerbuchse anzuordnenden Dichtteil mit einer sich an die Kolbenstange bzw. den Stößel anschmiegenden Dichtlippe und mit einer die Dichtlippe radial außen umgebenden Haftlippe, die sich an den Grund der Ringnut anlegt, und einen axial vor dem Dichtteil angeordneten Abstreif-/Halteteil mit einer die Kolbenstange bzw. den Stößel umschließenden Abstreiflippe und mit einem zwischen dem Dichtteil und der Abstreiflippe angeordneten Halteteil aufweist, wobei sich der Halteteil zur axialen Festlegung des Dichtungskörpers mit einer axialen Halteschulter an der von der axial vorderen Wandung der Ringnut gebildeten ringförmigen Stufe formschlüssig anlegt.

Eine als Abstreifring verwendete Dichtung dieser Art ist aus der US-A-2 907 596 bekannt. Bei der bekannten Dichtung befindet sich zwischen der Kolbenstange und der Stufe an einer Stopfbuchse nur die Abstreiflippe, welche über den Halteteil axial vorsteht. Der Dichtteil weist eine radial und axial innere Begrenzungsfläche auf, deren Profilnormalen den Grund der Ringnut in der Stopfbuchse durchstoßen.

Die bekannte Dichtung ist als Abstreifring dazu bestimmt und geeignet, von der Kolbenstange mitgeführtes Fluidum, das einen dem Abstreifring axial vorgelagerten Dichtring passiert hat, zurückzuhalten und in einem Ringraum zu sammeln, der zwischen der Dichtlippe und der konzentrischen Haftlippe durch eine axial nach hinten offene Nut im Dichtteil gebildet ist. Die radial und axial innere Begrenzungsfläche des Dichtteiles mit nahezu radial gerichteten Profilnormalen ist von einem geringen Druck des Fluidums beaufschlagt, solange die Kolbenstange ausführt und dabei Fluidum vom Dichtungsring bis zum Abstreifring mitführt. Dieser Druck des Fluidums wird dadurch abgebaut, daß die Kolbenstange beim Einfahren Fluidum zurückführt, welches den mit der Wirkung eines Rückschlagventils ausgestatteten eigentlichen Dichtungsring in entgegengesetzter Richtung passiert. Der maximale Druck des Fluidums auf den Abstreifring ist zu schwach, als daß dessen Sitz in der Ringnut der Stopfbuchse gefährdet wäre. Bei hohem Druck, der hauptsächlich die Haftung des Dichtteiles des Abstreifringes am Grund der Ringnut der Stopfbuchse vergrößern würde, könnte es aber vorkommen, daß der Abstreifring aus der Ringnut hinaus zwischen Kolbenstange und Stopfbuchse hindurch gepreßt wird.

Der Erfindung liegt daher die Aufgabe zugrunde, eine Dichtung der eingangs genannten Art zu schaffen, die bei allen Drücken, mit denen sie axial von hinten beaufschlagt wird, sicher in ihrem Einbauraum sitzt.

Diese Aufgabe ist erfindungsgemäß dadurch gelöst, daß der Halteteil eine axial vor der Haftlippe befindliche, radial äußere ringförmige Eckaussparung mit der Halteschulter für den axialen Angriff an der Stufe und mit einer zylindrischen Fläche zur radialen Anlage an dem die Stufe benachbarten, äußersten Abschnitt der Bohrung des Zylinder- bzw. Ventilkopfes aufweist, und daß die radial innere Begrenzungsfläche der Haftlippe die Halteschulter durchstoßende Profilnormalen aufweist. Dadurch wird mit zunehmendem Gasdruck im Zylinder die Kraft erhöht, mit der der Halteteil sowohl axial als auch bei gewöhnlich nicht achsparalleler Profilnormalen radial gegen den Zylinder gepreßt und damit verankert wird.

Bei einer bevorzugten Ausführungsform der erfindungsgemäßen Dichtung ist vorgesehen, daß der Halteteil eine sich an den Grund der Ringnut anlegende, kreiszylindrische, radial äußerste Mantelfläche aufweist und daß seine Eckaussparung einen rechten Winkel bildet, den ihre Halteschulter und ihre zylindrische Fläche einschließen. Infolgedessen genügt es, als Ringnut in der Wandung der Bohrung einen umlaufenden Einstich mit rechteckigem Querschnitt vorzusehen, der ohne Schwierigkeiten herstellbar ist.

Die bevorzugte Ausführungsform zeichnet sich dadurch aus, daß die axiale Tiefe der Eckaussparung der Stärke der axial vorderen Wandung der Ringnut in der Bohrung entspricht, so daß die axial vordere Stirnfläche des Halteteiles und die axial vordere Stirnfläche des Zylinder- bzw. Ventilkopfes im Bereich der Stufe in einer radialen Ebene liegen, über welche die Abstreiflippe axial vorsteht. Damit ist ein glatter Abschluß an der Stirnseite des Zylinder- bzw. Ventilkopfes gegeben, so daß sich von der Kolbenstange abgestreifter Schmutz nicht axial vor der Dichtung ansammelt oder jedenfalls dort leicht entfernt werden kann.

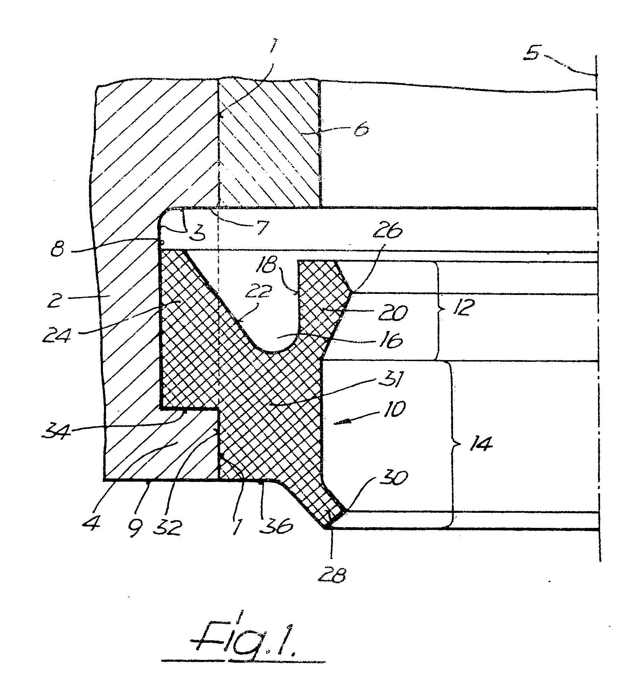

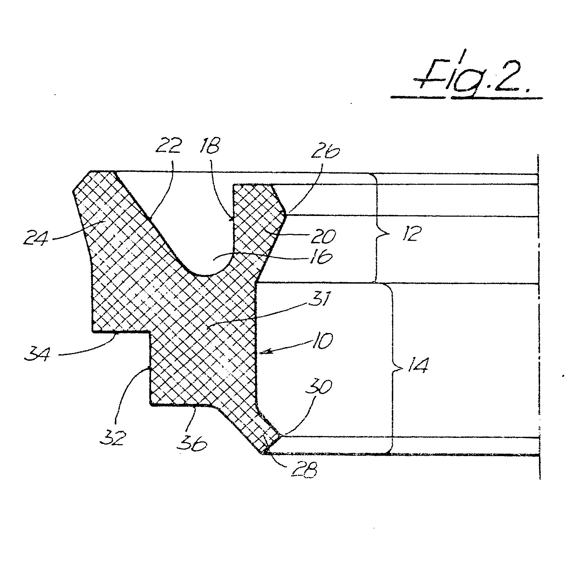

Im folgenden ist die Erfindung anhand der durch die Zeichnung beispielhaft dargestellten, bevorzugten Ausführungsform der erfindungsgemäßen Dichtung im einzelnen erläutert. Fig. 1 der Zeichnung zeigt die Ausführungsform in Verbindung mit einer Zylinderkopf-Bohrung und einer Lagerbuchse je geschnitten in einer die Bohrungsachse enthaltenden Längsebene, Fig. 2 in gleicher Darstellung nur die Ausführungsform, so daß das Profil des unbelasteten Dichtungskörpers sichtbar ist.

Eine kreiszylindrische Bohrung 1 in einem Zylinderkopf 2 ist mit einer im Querschnitt rechteckigen Ringnut 3 im Zylinderkopf versehen, die eine ringförmige, rechtwinklige Stufe 4 stehen läßt, welche radial nach innen gegen die Bohrungsachse 5 vorspringt. An die Ringnut 3 angrenzend ist in der Bohrung 1 eine im Zylinderkopf 2 versenkte Lagerbuchse 6 für eine nicht dargestellte Kolbenstange angeordnet.

Die zu erläuternde Ausführungsform der erfindungsgemäßen Dichtung ist ein sich selbst sichernder, einstückiger Dichtungskörper 10, der aus einem axial hinteren Dichtteil 12 mit Haftteil und aus einem axial vorderen Abstreif-/Halteteil 14 besteht, die je kreisringförmig ausgebildet sind und aus ein und demselben homogenen Material bestehen. Der hintere Teil 12 ist im Profil ungefähr V-förmig, wobei der gestaltgebende Ringraum 16 radial von der äußeren, kreiszylindrischen Begrenzungsfläche 18 einer inneren Dichtlippe 20 und von der inneren, konischen Begrenzungsfläche 22 einer äußeren Haftlippe 24 als Haftteil begrenzt sowie axial nach hinten offen ist und sich dorthin erweitert.

Die Dichtlippe 20 weist eine bei Niederdruckbetrieb ausreichend gerundete Dichtkante 26 auf. Ähnlich ist eine axial über den Zylinderkopf 2 vorstehende Abstreiflippe 28 des Abstreif-/Halteiles 14 mit einer schwach gerundeten Abstreifkante 30 versehen.

Die Haftlippe 24 berührt nicht die axial hintere, ringförmige Seitenwand 7 der Ringnut 3 und ist nicht wie die Dicht- und die Abstreiflippe 20 bzw. 28 radial entlastet, sondern belastet dargestellt; sie liegt radial von innen überall am Grund 8 der Ringnut 3 elastisch an. Auch zwischen der Dichtungslippe 20 und der Lagerbuchse 6 ist ein Ringspalt gelassen, durch den das Druckmedium, nämlich Gas, im allgemeinen Druckluft, in den Ringraum 16 des Dicht- mit Haftteiles 12, 24 eindringen kann.

Der abgesehen von seiner Abstreiflippe 28 im großen und ganzen rechteckig profilierte Abstreif-/Halteteil 14 weist in der radial äußeren, axial vorderen, ringförmigen Ecke seines Halteteiles 31 eine rechtwinklige Aussparung 32, 34 auf, die mindestens so groß ist wie die Stufe 4 am Zylinderkopf 2 und dieser angepaßt ist. Dementsprechend nimmt die Eckaussparung 32, 34 die Stufe 4 formschlüssig auf. Die Anordnung ist dabei so getroffen, daß die Profilnormalen der Begrenzungsfläche 22 der Haftlippe 24 in der Nähe des Grundes des Ringraumes 16 die von der Eckaussparung 32, 34 gebildete, in einer radialen Ebene liegende, ringförmige axiale Halteschulter 34 durchstoßen, welche den Gasdruck auf die Stufe 4 des Zylinderkopfes 2 überträgt. Die in Richtung der erwähnten Profilnormalen wirkende Druckkraft preßt aber auch die Haftlippe 24 und die angeformte Partie des Abstreif- mit Halteteiles 14, 31 gegen den Grund 8 der Ringnut 3. Die zylindrische Fläche 32 der Aussparung 32, 34 liegt radial an der Stufe 4 an.

Radial außerhalb der konischen Abstreiflippe 28, die axial nach vorn konvergiert, schließt sich eine in einer radialen Ebene liegende, ringförmige Stirnfläche 36 des Abstreif-/Halteiles 14 an, welche glatt in die Außenseite der Abstreiflippe 28 übergeht und mit der axial vorderen Stirnfläche 9 des Zylinderkopfes 2, insbesondere im Bereich der Stufe 4, bündig liegt. Mittels der Abstreifkante 30 von der gedachten Kolbenstange abgestreifter Schmutz wird daher zuerst zur Stirnfläche 36 und eventuell anschließend weiter zur Stirnfläche 9 abbefördert.

## Patentansprüche

1. Dichtung, insbesondere für pneumatische Kleinzylinder im Niederdruckbereich und für Pneumatikventile, zum Abdichten des Ringspaltes zwischen einer Kolbenstange oder einem Stößel und einem Zylinder- bzw. Ventilkopf (2) mit einer Bohrung (1) zur Aufnahme einer versenkten Lagerbuchse (6) für die Kolbenstange bzw. den Stößel und mit einer axial vor der Lagerbuchse (6) im Zylinder- bzw. Ventilkopf (2) liegenden Ringnut (3) zur Aufnahme eines einstückigen, eine bauliche Einheit aus homogenem Material bildenden Dichtungskörpers (10), welcher einen in der Nähe der Lagerbuchse (6) anzuordnenden Dichtteil (12) mit einer sich an die Kolbenstange bzw. den Stößel anschmiegenden Dichtlippe (20) und mit einer die Dichtlippe (20) radial außen umgebenden Haftlippe (24), die sich an den Grund (18) der Ringnut (3) anlegt, und einen axial vor dem Dichtteil (12) angeordneten Abstreif-/Halteteil (14) mit einer die Kolbenstange bzw. den Stößel umschließenden Abstreiflippe (28) und mit einem zwischen dem Dichtteil (12) und der Abstreiflippe (28) angeordneten Halteteil (31) aufweist, wobei sich der Halteteil (31) zur axialen Festlegung des Dichtungskörpers (10) mit einer axialen Halteschulter (34) an der von der axial vorderen Wandung der Ringnut (3) gebildeten ringförmigen Stufe (4) formschlüssig anlegt, dadurch gekennzeichnet, daß der Halteteil (31) eine axial vor der Haftlippe (24) befindliche, radial äußere ringförmige Eckaussparung (32, 34) mit der Halteschulter (34) für den axialen Angriff an der Stufe (4) und mit einer zylindrischen Fläche (32) zur radialen Anlage an dem der Stufe (4) benachbarten, äußersten Abschnitt der Bohrung (1) des Zylinder- bzw. Ventilkopfes (2) aufweist, und daß die radial innere Begrenzungsfläche (22) der Haftlippe (24) die Halteschulter (34) durchstoßende Profilnormalen aufweist.

2. Dichtung nach Anspruch 1, dadurch gekennzeichnet, daß der Halteteil (31) eine sich an den Grund (8) der Ringnut (3) anlegende, kreiszylindrische, radial äußerste Mantelfläche aufweist und daß seine Eckaussparung (32, 34) einen rechten Winkel bildet, den ihre Halteschulter (34) und ihre zylindrische Fläche (32) einschließen.

3. Dichtung nach Anspruch 1 oder 2, dadurch gekennzeichnet, daß die axiale Tiefe der Eckaussparung (32, 34) der Stärke der axial vorderen Wandung der Ringnut (3) in der Bohrung (1) entspricht, so daß die axial vordere Stirnfläche (36) des Halteteiles (31) und die axial vordere Stirnfläche (9) des Zylinder- bzw. Ventilkopfes (2) im Bereich der Stufe (4) in einer radialen Ebene liegen, über welche die Abstreiflippe (28) axial vorsteht.

## Claims

1. Packing, in particular for pneumatic small cylinders in the low pressure range and for pneumatic valves, for sealing the annular gap between a piston rod or plunger and a cylinder head or valve head (2) having a bore (1) for receiving a countersunk bearing bushing (6) for the piston rod or the plunger and having an annular groove (3) situated axially in front of the bearing bushing (6) in the cylinder or valve head (2) for receiving a packing body (10) which is formed in one piece to constitute a structural unit of homogeneous material, comprising a sealing part (12) to be arranged near the bearing bushing (6), which sealing part has a sealing lip (20) fitting snugly to the piston rod or plunger and a clinging lip (24) which surrounds the sealing lip (20) to be situated radially externally thereto and which bears against the base (18) of the annular groove (3), and a wiper and gripping part (14) situated axially in front of the sealing part (12) and having a wiper lip (28) surrounding the piston rod or plunger and a gripping part (31) arranged between the sealing part (12) and the wiper lip (28), the gripping part (31) having an axial gripping shoulder (34) which fits snugly against the annular step (4) formed by the axially front wall of the annular groove (3) in order to fix the packing body (10) in its axial position, characterised in that the gripping part (31) has a radially outer annular corner recess (32, 34) situated axially in front of the gripping lip (24) and comprising the gripping shoulder (34) for axially bearing against the step (4) and a cylindrical surface (32) for radially bearing against the outermost section of the bore (1) of the cylinder head or valve head (2), which outermost section is adjacent to the step (4), and in that the radially inner boundary surface (22) of the gripping lip (24) has normals to its profile intersecting the gripping shoulder (34).

2. Packing according to claim 1, characterised in that the gripping portion (31) has a radially outermost circular cylindrical surface bearing against the base (8) of the annular groove (3) and in that its corner recess (32, 34) forms a right angle enclosed by its gripping shoulder (34) and its cylindrical surface (32).

3. Packing according to claim 1 or claim 2, characterised in that axial depth of the corner recess (32, 34) is equal to the thickness of the axially front wall of the annular groove (3) in the bore (1) so that the axially front end face (36) of the gripping part (31) and the axially front end face (9) of the cylinder head or valve head (2) lie in one and the same radial plane in the region of the step (4), with the wiper lip (28) projecting axially in front of this plane.

## Revendications

1. Joint d'étanchéité, en particulier pour petits cylindres pneumatiques opérant dans le domaine des basses pressions et pour valves pneumatiques, ce joint étant destiné à étancher l'espace annulaire entre une tige de piston ou un poussoir et une tête de cylindre ou de valve (2) qui comprend un alésage (1) dans lequel est encastré un coussinet (6) pour la tige de piston ou pour le poussoir, et une gorge annulaire (3) s'étendant dans la tête de cylindre ou de valve (2), axialement en avant du coussinet (6) pour recevoir un corps d'étanchéité (10) monobloc qui constitue une unité structurelle en un matériau homogène, et qui comporte une partie d'étanchéité (12) placée à proximité du coussinet (6) et pourve d'une lèvre d'étanchéité s'appliquant contre la tige de piston ou le poussoir et d'unelèvre d'adhérence (24) qui entoure radialement extérieurement la lèvre d'étanchéite (20) et qui s'applique contre le fond (18) de la gorge (3), ainsi qu'une partie de raclage et de support (14) située axialement devant la partie d'étanchéité (12) et pourvue d'une lèvre de raclage (28) entourant la tige de piston ou le poussoir et, d'une partie de support située entre la partie d'étanchéité (12) et la lèvre de raclage (28) cette partie de support (31), s'appliquant étroitement par un épaulement de support axial (34), contre le gradin annulaire (4) de forme complémentaire formé par la paroi axialement antérieur de la gorge (3) pour assurer la stabilisation axiale du corps d'étanchéité, caractérisé en ce que la partie de support (31) présente, axialement en avant de la lèvre d'adhérence (24), un décrochement d'angle annulaire radialement extérieur (32, 34) comportant l'épaulement de support (34) pour le contact axial contre le gradin (4) et une surface cylindrique (32) destinée à s'appliquer radialement contre la section d'extrémité, voisine du gradin (4), de l'alésage (1) de la tête de cylindre ou de valve (2), et en ce que la surface limitrophe radialement intérieure (22) de la lèvre d'adhérence (24), présente des normales qui coupent l'épaulement de support (34).

2. Joint d'étanchéité selon la revendication 1, caractérisé en ce que la partie de support (31) présente une surface d'enveloppe cylindrique de révolution radialement extérieure, s'appliquant contre le fond (8) de la gorge annulaire (3) et en ce que son décrochement d'angle (32, 34) forme un angle droit qui comprend son épaulement de support (34) et sa surface cylindrique (32).

3. Joint d'étanchéité selon la revendication 1 ou 2, caractérisé en ce que la profondeur axiale du décrochement d'angle (32, 34) correspond à l'épaisseur de la paroi axialement antérieure de la gorge annulaire (3) de l'alésage (1), de sorte que la surface frontale axialement antérieure (36) de la partie de support (31) et la surface frontale axialement antérieure (9) de la tête de cylindre ou de valve (2) sont situées dans la région de gradin (4), dans un même plan radial, au-delà duquel la lèvre de raclage (28) fait saillie axialement.

Fig.1.

_Fig.2._